# EUROPEAN PATENT SPECIFICATION

(11) **EP 4 104 272 B1**
(45) Date of publication and mention of the grant of the patent: **02.12.2026**
(21) Application number: 21710136.9
(22) Date of filing: 10.02.2021
(51) Int. Cl.: H02J 3/32, H02J 9/06

(54) **POWER SUPPLY MANAGEMENT SYSTEM AND METHOD FOR USE WITH ONE OR MULTIPLE DIFFERENT UTILITY PROXIES**
STROMVERSORGUNGSMANAGEMENT-SYSTEM UND -VERFAHREN ZUR VERWENDUNG MIT EINEM ODER MEHREREN UNTERSCHIEDLICHEN VERSORGUNGSPROXYS
SYSTÈME DE GESTION D'ALIMENTATION ÉLECTRIQUE ET PROCÉDÉ DESTINÉ À ÊTRE UTILISÉ AVEC UN OU PLUSIEURS MANDATAIRES D'UTILITÉ DIFFÉRENTS

(30) Priority: 10.02.2020 US 202062972521 P; 13.04.2020 US 202063009096 P; 09.02.2021 US 202117171555
(43) Date of publication of application: 21.12.2022
(73) Proprietor: Vertiv Corporation, Westerville, OH 43082 (US)
(72) Inventor: PANFIL, Peter A., Columbus, OH 43214 (US); GALUPPI, Graziano, 40026 Imola (IT); PFLEGING, Robert C., O'Fallon, MO 63368 (US); MADARA, Steven M., Dublin, OH 43017 (US)
(74) Representative: Bryn-Jacobsen, Caelia
(86) International application number: PCT/US2021/017376
(87) International publication number: WO 2021/163129

(56) References cited:
- EP-A1- 2 793 345
- US-A1- 2019 067 989

## Description

### FIELD

The present disclosure relates to power supply management systems and methods, and more particularly to a power supply management system and method which makes use of a supplemental battery power source to overcome the response limitations when using various types of utility proxies such as fuel cells and integrated battery packs, which are not sufficiently fast in their response times to meet real time changes in load requirements.

### BACKGROUND

The statements in this section merely provide background information related to the present disclosure and may not constitute prior art.

In many applications, particularly such as data centers, hospitals, financial institutions, etc., there is a need for reliable electrical power to power various computer related equipment and other types of electronic equipment. To this end, such environments often may implement two or more sources of backup power in the event AC mains power is lost.

Interest in the use of both fuel cells and integrated battery power subsystems are gaining in popularity as utility proxies in critical applications. However, fuel cells in particular have traditionally suffered from significant limitations that have limited their applicability as a utility proxy. One particularly significant limitation is the inability of a traditional fuel cell, such as a solid oxide fuel cell, to respond sufficiently fast in real time to meet the needs of a load when called on to do so. Fuel cells are known to have a general "spongy" response when loaded, meaning that they are generally not able to respond virtually instantaneously to increases or decreases in the load. To a lesser extent, this limitation may also be experienced when using an integrated battery power subsystem (which provides an AC output) as a utility proxy. Still further, this "sponginess" in response is also typically present with both diesel and natural gas powered generators, but to a lesser extent than with fuel cells.

Another drawback with fuel cells is that their power output is more difficult to closely regulate, which can result in time periods where the fuel cell is producing more power than is needed by the critical load. In that instance the excess power must be channeled to a supplemental load, which amounts to wasted energy.

Accordingly, there is a need for systems and methods that make better and more efficient use of both fuel cells and integrated battery power subsystems as utility proxies for powering critical loads, and which overcome the above-described, well-known drawbacks associated with these types of utility proxies.

US2019/067989A1 in an abstract states that "An uninterruptible power supply includes an input configured to be coupled to a renewable power source and an energy storage component configured to receive and store energy and to provide stored power. Power circuitry is configured to receive the renewable power and the stored power and provide output power to a load. A controller coupled to the power circuitry determines whether an amount of available renewable power exceeds the output power level provided to the load and, if so, provides excess power from the renewable power to the stored energy component."

EP2793345A1 in an abstract states that "First to third power converters are connected to a grid-connected feed line in the order of the first power converter, the second power converter and the third power converter from the upstream end of the grid-connected feed line. A first sensor is disposed between the first power converter connected to a solar battery and the second power converter connected to a storage battery, and senses electric power flowing back to a power grid through the grid-connected feed line. A second sensor is disposed between the second power converter and the third power converter connected to a fuel cell, and senses electric power flowing back to the power grid through the grid-connected feed line. The second power converter operates so that the electric power flowing back to the power grid, sensed with the first sensor is kept zero, and the third power converter operates so that the electric power flowing back to the power grid, sensed with the second sensor is kept zero."

### SUMMARY

The present invention is set out in the independent claims, with some optional features set out in the claims dependent thereto.

This section provides a general summary of the disclosure, and is not a comprehensive disclosure of its full scope or all of its features.

In one aspect the present invention provides a power supply management system according to independent claim 1.

In another aspect the present disclosure relates to a power supply management method according to independent claim 14.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.

Corresponding reference numerals indicate corresponding parts throughout the several views of the drawings.
Figure 1 is a high level schematic diagram of one embodiment of a system in accordance with the present disclosure;
Figure 2 is another example not claimed in the present disclosure that illustrates "islanding" (i.e., isolating) of the integrated battery storage subsystem from the other power sources;
Figure 3 is a table listing operations for a power converter operating in a conventional uninterruptible power supply (UPS) application with no generator available, when power from a utility is lost;
Figure 4 is a table listing operations for a power converter that has an available generator;
Figure 5 is a table listing operations for a power converter that has available an integrated battery storage subsystem employing an extended run lithium ion battery pack ("extended run LIB"), but no generator, for assisting with conditions where power from a utility is lost;
Figure 6 is a flowchart showing one example of operations that may be performed by the system of Figure 1 in managing start-up of a fuel cell that is incorporated into the system;
Figure 7 is a flowchart showing one example of operations that may be performed by the system of Figure 1 in handling both a step load increase and a step load decrease; and
Figure 8 is a high level block diagram of various submodules that may be included in the smart power optimization software module of the system of Figure 1.

### DETAILED DESCRIPTION

Example embodiments will now be described more fully with reference to the accompanying drawings.

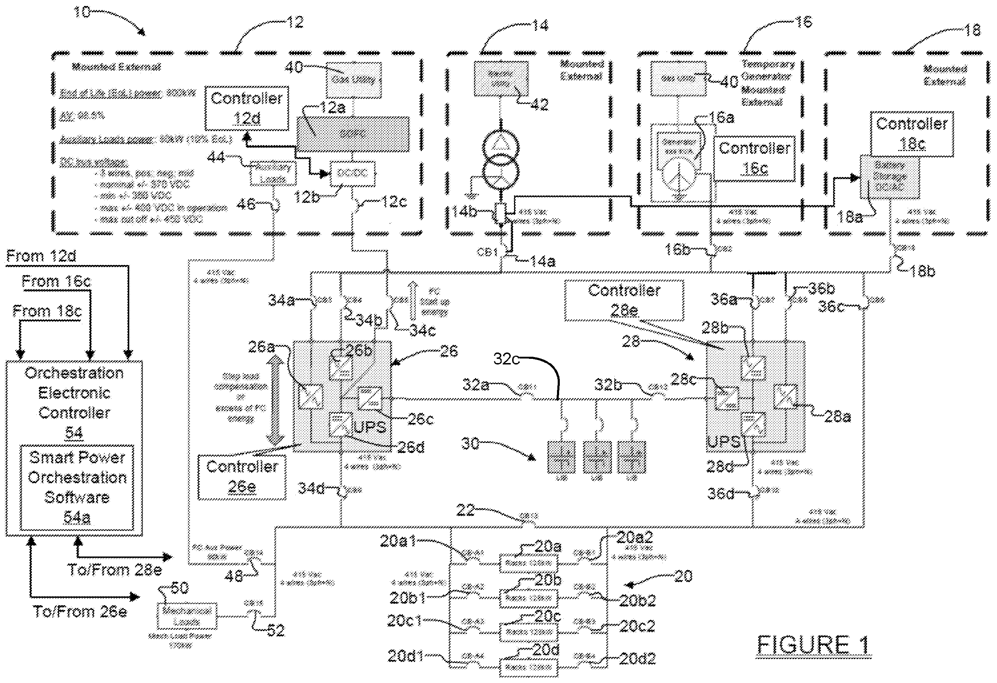

Referring to Figure 1, one embodiment of a power supply/management system 10 is shown in accordance with the present disclosure. The system 10 in this example makes use of four distinct power supply sources: a fuel cell subsystem 12, an electric utility power source 14 (i.e., AC mains power source), an external generator subsystem 16 (either diesel powered or natural gas powered), and an integrated battery power subsystem 18. The power supply sources 12, 14, 16 or 18 may be used, in any hierarchical order, to power a load 20. The power supply sources 12, 16 and 18 in this example form utility "proxies", meaning they act as a substitute for the electric utility power source 14 when the utility power source 14 is not available. It will be appreciated that other utility proxies, for example, back-up systems to the power supply sources 12, 16 or 18, may be incorporated into the system 10. And while a fuel cell subsystem, an external generator subsystem and an integrated battery power subsystem have been illustrated as substitute power sources, it will be appreciated that the system 10 is not limited to use with only these types of alternative power sources. Virtually any other form of alternative power source may be incorporated into the system 10 with little or no modification to the system.

The load 20 in this example is shown as four rows of equipment racks 20a-20d each receiving 125kW of electrical power. Of course, other types of loads may be powered by the system 10, as will be discussed further in the following paragraphs. Accordingly, the system 10 is not limited to use with only equipment rack mounted electrical computing components. The supply of power to the loads 20a-20d may be controlled through a plurality of circuit breakers 22 and 20a1/20a2, 20b1/20b2, 20c1/20c2, 20d1/20d2, the operation of which will be explained more fully in the following paragraphs.

The system 10 in this example also makes use of two power converters 26 and 28 which are coupled to each of the power supply sources 12-18, as well to the loads 20a-20d. By "power converter" it is meant a device that can function in the manner of a conventional uninterruptible power supply (UPS) that supports a load by drawing power from a battery or battery bank when utility power fails, but that has the additional capability of directing power from any power source to any load or to another power source to which it is connected. In this example the power converters 26 and 28 are configured in the well-known "redundant 1+1" configuration for even further improved reliability. A supplemental battery subsystem 30, in this example a bank of lithium ion batteries (hereinafter "power converter LIBs" 30) located remote from the power converters 26 and 28, is provided which may be coupled to either, or both, of the power converters 26 and 28 via selective closing of circuit breakers 32a and 32b located on a dedicated power bus 32c. The function of the power converter LIBs 30 is an important feature of the system 10 and will be explained in greater detail in the following paragraphs.

Coupling of the power converter 26 to the power sources 12-18 may be controlled by selective closing of circuit breakers 34a, 34b, and 34c, and to the load 20 via a circuit breaker 34d. Coupling of the power converter 28 to the power supply sources 12-18 is controlled by selective closing of the circuit breakers 36a and 36b, and to the load 20 by circuit breaker 36d. Power converter 26 includes a bypass circuit 26a, a rectifier subsystem 26b, a DC/DC converter 26c, a DC/AC inverter 26d and an electronic controller 26e. Power converter 28 likewise includes the same subsystems 28a-28e. The fuel cell subsystem 12 may include a fuel cell 12a, in this example a solid oxide fuel cell ("SOFC"), which receives natural gas from a gas utility 40. A DC/DC converter 12b converts the DC output from the fuel cell 12a to a DC output of different magnitude, which may then be fed by closing circuit breaker 12c and circuit breaker 34c to the power converter 26. The power converter 26 receives the DC power supplied from the fuel cell subsystem 12 at its inverter 26d and converts the DC power to AC power, which is then supplied to the load 20. The AC power may also be used by the DC/DC converter 26c of the power converter 26 to help recharge the power converter LIB 30. These operations are controlled by the electronic controller 26e. Advantageously, if the fuel cell subsystem 12 is producing more power than is required by the load 20, the excess power can be used to charge the power converter LIBs 30 and/or the extended run LIB 18a of the integrated battery power subsystem 18 (explained in greater detail in the following paragraphs), and if the power converter LIBs 30 and/or the extended run LIB 18a are adequately charged, the excess power can be delivered to the utility 14 or to an external generator port (not shown) of the electric generator 16a to help power other loads at the site. As a last resort when the fuel cell system 12 is producing excess power, a supplemental load (not shown) may be added to absorb excess power, or the fuel cell subsystem 12 output may be throttled back.

The utility power source 14 includes an electric utility 42 which can be used to supply AC power, in this example 415Vac, to circuit breaker 14a and under voltage relay 14b, and to the bypass circuit 26a or 28a of either (or both) of the power converters 26 or 28, or alternatively to the rectifiers 26b or 28b (or both), depending on which of the circuit breakers 34a, 34b, 36a or 36b are selectively closed. While the under voltage relay 14b may not be needed in all applications, it is nevertheless helpful in sensing an under voltage (i.e., low voltage) condition existing at the output of the utility power source 14 and immediately opening the circuit breaker 14a and signaling the system 10 to switch to power from an alternate power source. In the example shown in the system 10, the alternate power source is the integrated battery power subsystem 18.

The generator subsystem 16 may receive natural gas from the gas utility 40 or it may use diesel fuel as its fuel source. For convenience, the following discussion will reference natural gas being used to power the generator subsystem 16. The generator subsystem 16 includes an electrical generator 16a which produces an AC output. The AC output in this example is 415Vac, which may be supplied to the rectifiers 26b or 28b, or to the bypasses 26a or 28a, of the power converters 26 and 28 through circuit breaker 16b, or even to the load 20 via circuit breaker 16b and circuit breakers 36c and 22 and one or more of the circuit breakers 20a1/20a2, 20b1/20b2, 20c1/20c2 and 20d1/20d2.

The integrated battery power subsystem 18 may include a battery bank with an extended run LIB 18a having an associated inverter that converts the DC output of the extended run LIB 18a to an AC output, in this example a 415Vac output. The AC output from the integrated battery power subsystem 18 may be applied through circuit breaker 18b to the rectifier 26b of the power converter 26, and/or to the rectifier 28b of power converter 28, or even directly to the load 20 via selective closing of the circuit breakers 36c and 22 and one or more of the circuit breakers 20a1/20a2, 20b1/20b2, 20c1/20c2 and 20d1/20d2.

Optionally, the output of the fuel cell subsystem 12 or the output of the integrated battery power subsystem 18 may be used to supply power to one or more auxiliary loads 44. This will involve, for example when using the fuel cell subsystem 12, selective closing of circuit breakers 12c, 34c, 34d, 46 and 48. For the case of the integrated battery power subsystem 18 this would involve selective closing of circuit breakers 18b, 36c, 48 and 46. Optionally, the fuel cell subsystem 12 or the integrated battery power subsystem 18 may also be used to supply AC power to one or more mechanical loads 50 through selective closing of circuit breaker 52. And of course, either one, or both, of the power converters 26 and 28 may drive the loads 44 and 50 as well, regardless of the power source that either one, or both, of the power converters 26 and 28 is/are being powered from.

As is understood in the industry, the utility breakers 12c, 14a. 16b and 18b are operated in a "break before make" fashion when switching between different power supply sources 12, 14, 16 and 18. A particular advantage of the system 10 is that the power converter LIB 30 can be used as a "bridge" to provide power to the power converter 26 or 28 while switching from one power source to another.

To coordinate overall operation and monitoring of the system 10, an orchestration electronic controller 54 having a smart power orchestration software module 54a (hereinafter simply "software module" 54a) may be included. The orchestration electronic controller 54 (hereinafter simply "controller" 54) receives inputs from an electronic controller 12d associated with the fuel cell subsystem 12, from an electronic controller 16c associated with the natural gas powered generator subsystem 16, and from an electronic controller 18c associated with the integrated battery power subsystem 18. The controller 54 is also in bi-directional communication with the electronic controller 26e of the power converter 26 and the electronic controller 28e of the power converter 28. The controller 54 and its software module 54a monitor overall operation of the power converters 26 and 28 using information received from the electronic controllers 26e and 28e. The controller 54 also uses information received from the electronic controllers 12d, 16c and 18c, in real time, to monitor which power supply source 12-18 is presently being used at any given time. Optionally, the controller 54 may also be in communication with a separate, remote controller (not shown) either through a wired or wireless connection to receive additional information or commands to help operate system 10.

The software module 54a may be constructed to help the system 10 carry out any desired hierarchical power source usage scheme. For example, the software module 54a may include one or more programs or submodules that control the system 10 to use power from the electric utility power supply source 14 if available, but if not, then the integrated battery power subsystem 18 if available, and if not, then the fuel cell subsystem 12 if available, and if not, then the natural gas generator subsystem 16. Virtually any hierarchical power use scheme may be employed, and the software module 54a can be readily modified or updated to accommodate other new power sources which are added at a later date. The software module 54a can also be updated to incorporate a modification to an existing hierarchical power usage scheme, should any one of the utility proxies be removed from the system 10. As described in the following paragraphs, the software module 54a may further be constructed to include programs or submodules that may perform functions such as demand management, energy cost optimization, and grid stabilization.

The power converter controllers 26e and 28e may also perform the functions of "qualifying" the power being received via any of the power supply sources 12-18, which involves monitoring frequency, voltage and/or current of the signal being received, and taking action to inform the controller 54 if power being received from the currently selected power source varies unacceptably in any way (e.g., unacceptable frequency variation, above a set upper voltage threshold, below a set lower voltage threshold, etc.). The controller 54 may use this information to command switching over, in real time, to a different power source, by selective closing and opening of the various circuit breakers used in the system 10.

An especially important advantage of the system 10 is the use of the power converter LIBs 30 to augment the AC power provided by any of the power supply sources 12, 14, 16 or 18. In particular, the use of the fuel cell subsystem 12, which has a "spongy" response to loads, meaning it cannot respond virtually instantaneously to the demands of the load, benefits significantly through the use of the power converter LIBs 30. The power converter LIB 30 can also be used to supply power from the power converter 26 through the breakers 32a, 34c and 12c to the DC/DC converter 12b of the fuel cell subsystem 12 to help "heat up" the fuel cell subsystem, during start-up of the fuel cell subsystem 12. The power converter LIBs 30 can be used to augment the output of the power converter 26 or 28, depending on which one of circuit breakers 32a or 32b is closed, when the power converter is receiving the output from the fuel cell subsystem 12, to better ensure a uniform output from the power converter(s) 26 and/or 28. Closing both circuit breakers 32a and 32b enables the power converter LIBs 30 to provide DC power to both power converters 26 and 28 simultaneously if both power converters are operating. Depending on the specific model/make of the integrated battery power subsystem 18 being used, this subsystem may also suffer from an unacceptably long response time and/or inability to rapidly respond to a demand from the load, and therefore also benefit from the use of the power converter LIBs 30.

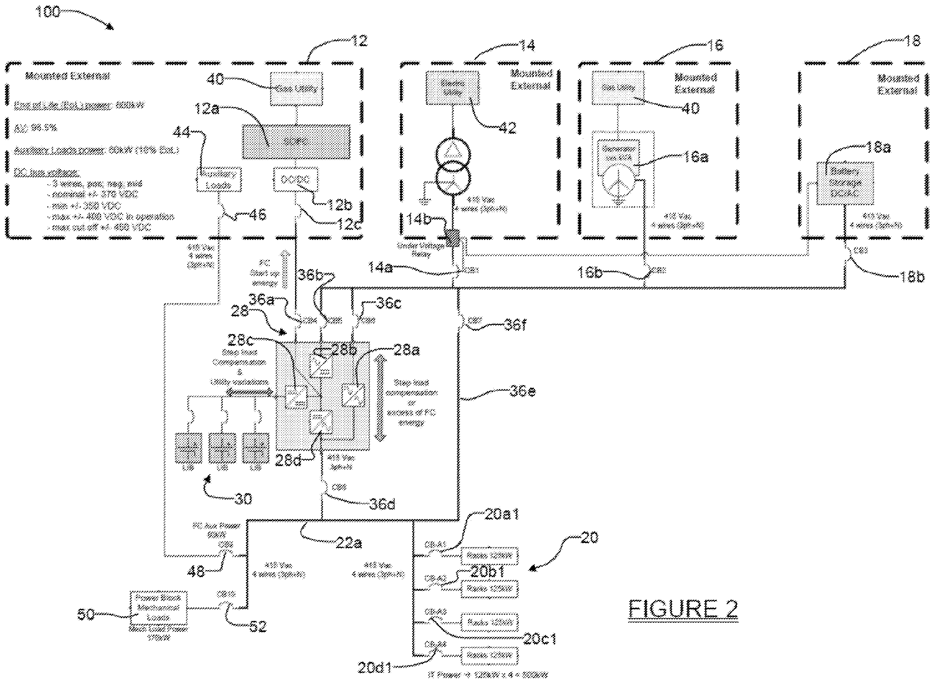

Referring to Figure 2, a system 100 in accordance with another example is shown. Components in common with those of the system 10 are labelled with the same reference number of their corresponding component in system 10. To avoid cluttering the drawing the controllers 54, 26e, 28e, 12d, 16c and 18c have been omitted in Figure 2, although it will be appreciated that these components may be present and perform the same operations as described for the system 10 of Figure 1. To simplify the discussion of the system 100, only the power converter 28 is shown as part of the system, with it being understood that power converter 26 could easily be incorporated in the manner shown in Figure 1.

The system 10 of Figure 1 and the system 100 of Figure 2 are each configured to "island" the integrated battery power subsystem 18. By "island" it is meant to isolate the integrated battery power subsystem 18 from the power supply sources 12-16. This eliminates any direct circuit path for the output from the integrated battery power subsystem 18 to flow directly into any of the power supply sources 12-16, while still 9 providing a configuration that enables re-charging of the integrated battery power subsystem 18 when one of the other power supply sources 12, 14 or 16 becomes available for use. A configuration that "islands" the integrated battery power subsystem 18 may be recommended by the manufacturer of the subsystem. For example, certain integrated battery packs available from Tesla, Inc., which may be used with the systems 10 or 100 as the integrated battery power subsystem 18, are recommended to be islanded from all other available power sources.

The system 100 of Figure 2 is less complex than system 10 of Figure 1 and thus will be referred to throughout the following paragraph in order to provide a more convenient explanation of islanding. Islanding of the integrated battery power subsystem 18 (i.e., isolating from the electric utility power supply source 14 and the generator subsystem 16 via breakers 14a and 16b) still permits communication of an output side of the circuit breaker 18b directly with the load 20 and with the power converter 26. This is accomplished by tying the output side of the circuit breaker 18b to both a power bus portion 22a of the system through the circuit breaker 36f, and to the input sides of the bypass circuit 28a and the rectifier circuit 28b of the power converter 28 (through circuit breakers 36c and 36b, respectively).

In operation, when circuit breakers 18b and 36c are closed, and circuit breakers 14a, 16b, 36b and 36f are opened, the output of the integrated battery power subsystem 18 can be applied to the bypass circuit 28a of the power converter 28. When the circuit breakers 20a1/20b1/20c1/20d1 on the input side of the load 20 are closed, then AC power from the integrated battery power subsystem 18 will be directly applied to the power bus portion 22a and used to power the load 20. In this configuration there is no possibility of the integrated battery power subsystem 18 applying any portion of its output to any one of the power supply sources 12, 14 or 16. If needed to augment the output of the battery power subsystem 18, the power converter LIBs 30 can help by applying their output to the DC/DC converter 28c, which is converted to an AC output by the inverter 28d before being placed on the power bus portion 22a (through circuit breaker 36d).

In the event of a fault in the power converter 28, the integrated battery power subsystem 18 may still be used to directly power the load 20 by closing circuit breakers 18b and 36f, and opening circuit breakers 14a, 16b, 36b and 36c. In this configuration a maintenance line 36e is used to help create a direct path from the integrated battery power subsystem 18 to the power bus portion 22a, and thus to the load 20.

When recharging of the integrated battery power subsystem 18 is needed, circuit breaker 18b is closed, circuit breaker 36f is opened, and either one of circuit breakers 14a or 16b is closed. This enables power to be provided by either one of the power sources 14 or 16 to the battery integrated power subsystem 18 for re-charging, as well as simultaneously to either the rectifier circuit 28b or the bypass circuit 28a of the power converter 28, depending on which one of circuit breakers 36b and 36c is closed. Thus, re-charging can be accomplished simultaneously while the power source 14 or 16 is supplying power to the power converter 28.

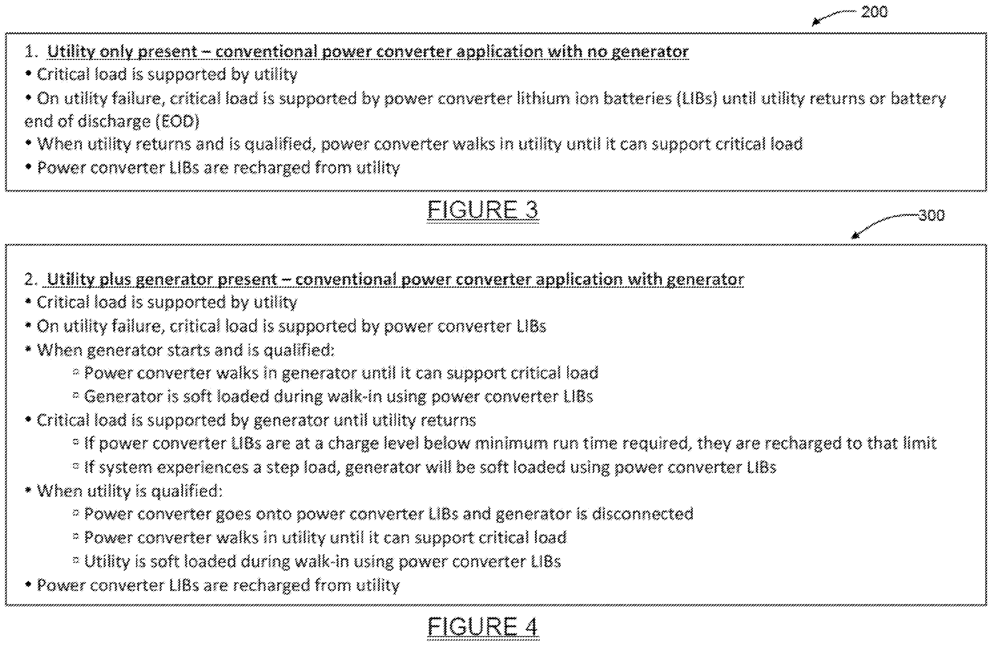

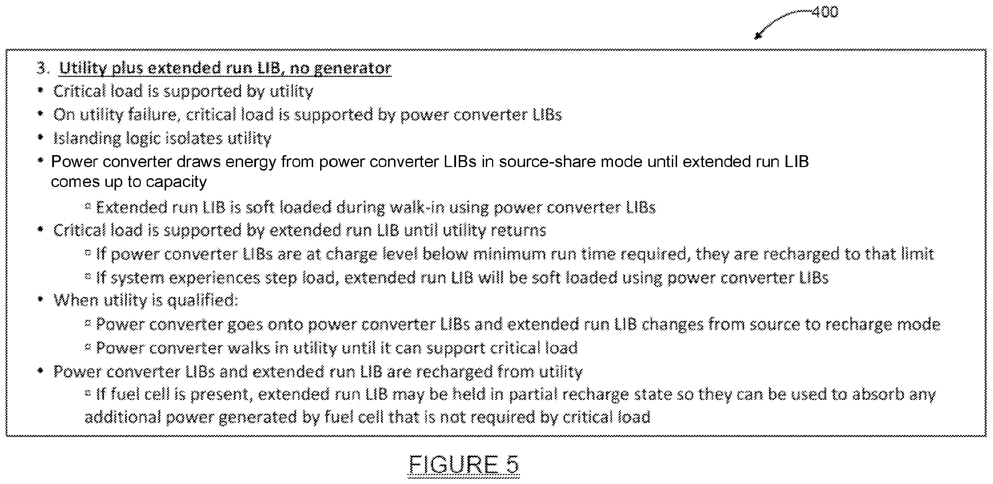

Figures 3-5 provide examples of operations that may be performed by the system 10 when a power converter 26 or 28 is used with different power sources or combinations of power sources, i.e., utility power supply source 14 and/or utility proxy power supply sources 12, 16 and 18. Figure 3 illustrates a table 200 showing various operations that may be performed by the system 10 when only power from the utility is present (i.e., power from utility power source 14) and at least one of the power converters 26 or 28 is present. In these operations, the power converter 26 or 28 functions as a conventional UPS when utility power is lost. Figure 4 illustrates a table 300 showing operations that may be performed by the system 10 when the utility power supply source 14 is present along with the generator subsystem 16. Figure 5 illustrates a table 400 showing operations that may be performed by the system 10 when the utility power supply source 14 and the integrated battery power subsystem 18 are both available, but the generator subsystem 16 is not. The "walk-in" process mentioned in the three scenarios of Figures 3-5 for switching over to a power source is a well-known process in the art by which electric power from the source being walked in is gradually applied to the load as power being supplied to the load from an alternate power source is gradually removed. The "soft loading" process also mentioned in Figures 3-5 is also a well-known process in the art by which power is gradually drawn from a source to support a load (or a load increase) at the same time as additional power required to support the load is supplied by an alternate power source.

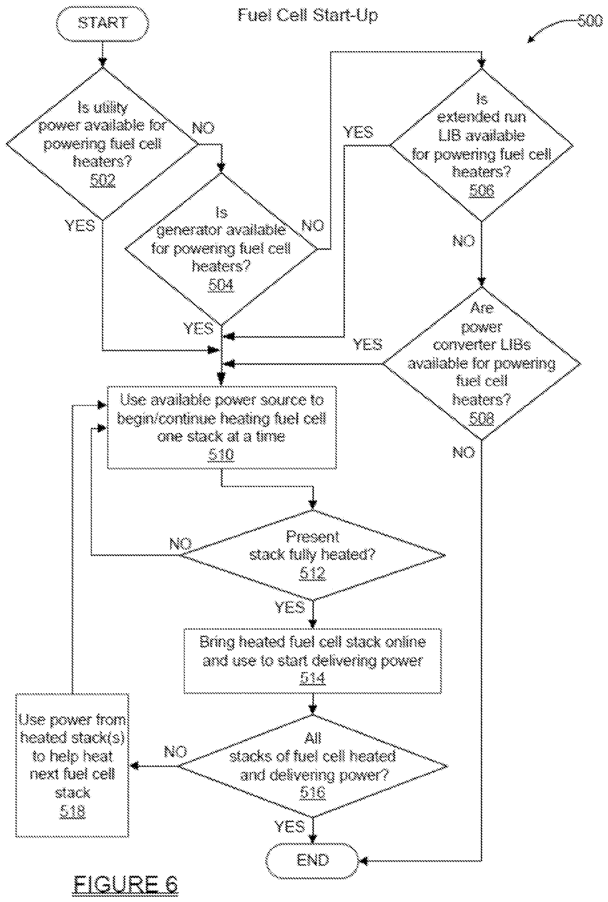

Referring now to Figure 6, a flowchart 500 is shown to illustrate various operations that may be performed by the system 10 in starting up the fuel cell 12a of fuel cell subsystem 12. Initially at operations 502, 504, 506 and 508 checks are made, in this example in sequential fashion, to determine if utility power is available for powering the fuel cell heaters (operation 502), if a generator is available for powering the fuel cell heaters (operation 504), if an extended run LIB is available for powering the fuel cell heaters (operation 506), or if power converter LIBs are available for powering the fuel cell heaters (operation 508). The "priority" order of these four checks may be modified depending on design preferences, and this particular sequence of checks is therefore just meant to be one example of a suitable "priority" for using the various supplemental power sources that may be available. Also, fuel cells typically incorporate a plurality of stacks with separate heaters, which are brought on line one at a time, and this assumption will be made for this example.

Depending on which ones of the checks at operations 502-508 produces the first "Yes" answer, that particular power source will be used to begin (or to continue) heating of the fuel cell 12a one stack at a time, as indicated at operation 510. If utility power or generator power is present (i.e., operation 502 or operation 504 produces a "Yes" answer), then the power converter 26 or 28 applies DC voltage from its DC bus to the fuel cell heaters. If utility power and generator power are unavailable, then the power converter 26 or 28 applies DC voltage to the fuel cell heaters from the extended run LIB 18a (at operation 506) or from the power converter LIBs 30 (at operation 508) via its DC bus, but at a reduced power level. At operation 512 a check is made to determine if the particular stack presently being heated is fully heated, and if this check produces a "No" answer, then operations 510 and 512 are repeated. If the check at operation 512 returns a "Yes" answer, indicating that the stack being heated is fully heated, then that fuel cell stack is brought online and used to start delivering power, as indicated at operation 514. A check is then made at operation 516 if all of the stacks of the fuel cell 12a have been fully heated. If this check produces a "Yes" answer, then the fuel cell start-up operation successfully concludes. If operation 516 produces a "No" answer, then at operation 518 the stack that has just been fully heated, along with any previously fully heated stack(s), is/are used to begin heating the next stack and supporting the load. Operations 510-518 may be repeated until the check at operation 516 indicates all of the stacks are fully heated and delivering power.

If the check at operation 508 (the last of the four options for powering the fuel cell stack heaters) produces a "No" answer, then the fuel cell start-up procedure is suspended.

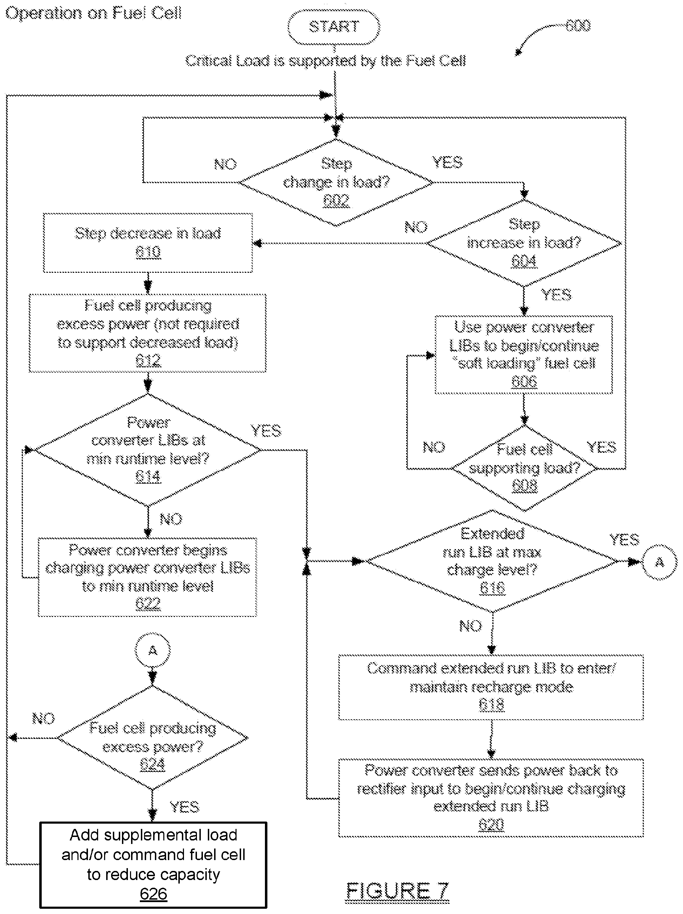

Figure 7 shows a flowchart 600 illustrating one example of operations that may be performed by the system 10 to monitor for, detect and respond to changes in the load while using the fuel cell subsystem 12 to power the load. For this example it will be assumed that the critical load is being fully supported by the fuel cell subsystem 12 and the preferred mode of fuel cell operation is to remain at constant load. Further, it will be assumed that the extended run LIB 18a has been held at a partial recharge state, which may be a charge level less than its maximum capacity that may be preselected by the system designer. At operation 602 a check is made if a step change in the load has occurred. If this check produces a "No" answer, the system 10 repeats operation 602, continuously monitoring for and detecting load changes; this may be done at the subcycle level, for example, at approximately 3 kHz. If the check at operation 602 produces a "Yes" answer, then operation 604 determines if the load change is a step increase.

If the check at operation 604 produces a "Yes" answer, indicating that a step increase in the load has been experienced, then at operation 606 the power converter LIBs 30 may be used to begin/continue soft loading of the fuel cell subsystem 12. "Soft loading" in the present example means that additional energy required to support the load increase is supplied by the power converter LIBs 30 while energy is gradually drawn from the fuel cell subsystem 12. A check is then made at operation 608 to determine if the fuel cell subsystem 12 is fully supporting the load. If it is not, then the soft loading of the fuel cell subsystem 12 continues at operation 606. If this check produces a "Yes" answer, then operation 602 may be repeated as the system 10 continues monitoring for a load change.

If the check at operation 604 produces a "No" answer, indicating that a step decrease in the load has been detected (operation 610), then the fuel cell subsystem 12 is currently producing more power than is required to support the decreased load (operation 612). A series of operations may then be performed to use the excess power from the fuel cell subsystem 12 to recharge the power converter LIBs 30 and the extended run LIB 18a, if necessary. At operation 614 a check is made to determine if the charge level of the power converter LIBs 30 is at its minimum runtime level. By "minimum runtime level" it is meant the level of charge that is required to maintain the battery in operational condition for a time designated by the user. In one example the minimum runtime level may be 80% of maximum battery charge, although this level may be varied higher or lower by the system designer. If the check at operation 614 produces a "Yes" answer, then no recharging of the power converter LIBs 30 is necessary, and a check may be made at operation 616 to determine if the extended run LIB 18a is at its maximum charge level. The maximum charge level of the extended run LIB 18a may reflect system performance factors such as speed of fuel cell response, or may be preset to be 100% of capacity, 80% of capacity, or any other level selected by the system designer. If the check at operation 616 also produces a "Yes" answer, then no recharging of the extended run LIB 18a is needed, and at operation 624 the system 10 determines if the fuel cell subsystem 12 is still producing excess power. If so, at operation 626, a supplemental load may be added to keep the system 10 in balance, and if the critical load has not recovered, it may be necessary for the system 10 to command the fuel cell subsystem 12 to reduce its capacity. After operation 626, or if at operation 624 the fuel cell subsystem 12 is no longer producing excess power, the system 10 continues monitoring for a load change at operation 602.

If the check at operation 616 indicates that the extended run LIB 18a is not at its maximum charge level, then the system 10 may command the extended run LIB 18a to enter (or to maintain) a recharge mode of operation, as indicated at operation 618. Then at operation 620 the power converter 26 sends excess power available from the fuel cell subsystem 12 back to the rectifier input (i.e., the input side of rectifier subsystem 26b), to begin/continue charging the extended run LIB 18a. Operations 616-620 are repeated until at operation 616 the extended run LIB 18a is detected as being charged to its maximum charge level, at which point the check at operation 624 may be performed.

If the check at operation 614 produces a "No" answer, indicating that the power converter LIBs 30 are not charged to their minimum runtime charge level (in this example, 80% of maximum battery charge), then at operation 622 the power converter 26 begins charging the power converter LIBs using excess power from the fuel cell subsystem 12. Operations 614 and 622 are then repeated until the check at operation 614 produces a "Yes" answer, indicating that the power converter LIBs 30 are charged to their maximum predetermined charge level.

It will be appreciated, then, that setting and maintaining the charge levels of the power converter LIBs 30 and extended run LIB 18a at values less than 100% of capacity enables excess power from the fuel cell subsystem 12, which suddenly becomes available because of a step decrease in the load, to be "absorbed" or utilized by the power converter LIBs 30 and extended run LIB 18a for recharging purposes. Without this feature, the need would exist to immediately introduce a supplemental load, which would serve to immediately help absorb the excess power available from fuel cell subsystem 12, but without serving any other useful purpose. Setting and maintaining the charge level of the power converter LIBs 30 and extended run LIB 18a at something less than 100% thus serves two useful purposes: helping to provide a means by which the excess power may be absorbed, as well as using the excess power to recharge the power converter LIBs 30 and extended run LIB 18a.

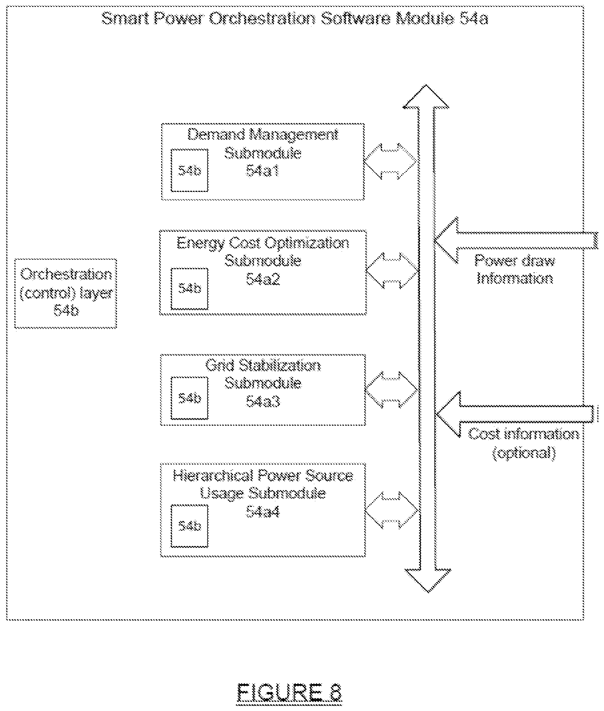

The smart power orchestration software module 54a is shown in greater detail in Figure 8. The software module 54a helps to implement an intelligent control/utilization scheme by which the ultimate goal of the power converters (e.g., power converters 26 and 28) is to always deliver ITIC compliant power to the critical load. To this end, the software module 54a may control a number of programs or submodules. For example, a demand management submodule 54a1may involve enforcing a preset limit on utility power draw, such as a limit in response to utility requirements, guidelines, or discount schedules. An "orchestration layer" 54b, acting as a control layer, uses external signals or internal predetermined settings to limit the amount of power drawn from the utility. The power converters 26 and 28 source-share between the utility and other available energy sources in the manner described above. For example, if the fuel cell subsystem 12a is available, the system 10 may draw energy from it, while in emergency situations the system 10 may draw from the power converter LIBs 30 and/or the extended run LIB 18a.

The software module 54a may also include an energy cost optimization submodule 54a2 to help determine which of two or more available energy sources, at any given time of day, is the lowest cost energy source. The energy cost optimization submodule 54a2 may be used to help select the lowest cost energy source, based in part on information provided by the orchestration layer 54b, such as from external signals or data, or possibly from saved settings or data which enable it to determine the real time cost of energy each of the available energy sources. It is expected that the lowest cost energy source will be desired to power the critical load in most scenarios, although the software module 54a could be configured to account for other unusual scenarios or conditions if, for some reason, the lowest cost energy source should not be used.

If the system 10 is grid tie enabled it may export energy if the cost of generated energy is lower than the recovered grid tie revenue. The system 10 preferably always keeps the power converter LIBs 30 charged to their minimum runtime limits. The system 10 may delay recharging the extended run LIB 30 as long its partial recharge state can be maintained. If the extended run LIB 30 is not at its maximum charge level, it may be recharged until it is (which as noted above may not be the 100% maximum charge value, but instead a lower value, for example, 80%).

The software module 54a may also include a grid stabilization submodule 54a3. The grid stabilization submodule 54a3 works with the orchestration layer 54b, and optionally with the energy cost optimization submodule 54a2, and further optionally with external signals providing either one or both of power draw and cost information, to determine how much grid stabilization energy is required. The power converters 26 and/or 28 may deliver to its/their respective limit(s) of available power using the energy cost optimization operation to provide the desired grid stabilization energy.

The software module 54a may also include a hierarchical power source usage submodule 54a4, which, as previously described, may determine the order in which utility proxies are used if the utility power supply becomes unavailable.

The various embodiments of the present disclosure all provide the ability to make use of two or more different utility proxies as power sources, in accordance with a predetermined hierarchy of use. The various embodiments of the present disclosure, in particular, overcome the drawbacks associated with using fuel cells and battery power subsystems as a primary power source. Such power sources are often not sufficiently responsive to real time changes in loads being powered, and the various embodiments of the present disclosure eliminate these drawbacks without significantly complicating the overall system design or significantly increasing its cost.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A power supply management system (10) adapted for use with power sources (12, 14, 16, 18), to control powering a load when an AC mains power source is not available to provide power to the load, the system comprising:
a first power converter (26) forming an uninterruptible power supply, the first power converter including a first power converter controller (26e) configured to control operation of the first power converter (26);
a second power converter (28) forming an additional uninterruptible power supply, the second power converter (28) including a second power converter controller (28e) configured to control operation of the second power converter (28);
a supplemental battery subsystem (30) in communication with the first and second power converters (26,28) for supplying DC power to the first and second power converters (26,28);
a plurality of circuit breakers configured to control supply of power to the load;
the first and second power converter controllers (26e, 28e) further configured to monitor the application of power from the power sources to the load, and to use the DC power supplied by the supplemental battery subsystem to supplement the generation of power by the respective power converter, to thus assist in powering the load along with the power being provided by the power sources; and
an orchestration electronic controller (54), wherein
the orchestration electronic controller (54) is configured to receive inputs from respective controllers (12d, 16c, 18c) of the power sources (12, 16, 18), namely from an electronic controller (12d) associated with a fuel cell subsystem (12), from an electronic controller (16c) associated with an external generator subsystem (16), and from an electronic controller (18c) associated with an integrated battery power subsystem (18);
the orchestration electronic controller (54) is in bi-directional communication with the first power converter controller (26e) and the second power converter controller (28e);
the orchestration electronic controller (54) is configured to monitor overall operation of the first and second power converters (26,28) using information received from the first and second power converter controllers (26e,28e);
the orchestration electronic controller (54) is configured to use information received from the controllers (12d, 16c, 18c) of the power sources, in real time, to monitor which power supply source (12-18) of the power sources is presently being used at any given time,
wherein the first and second power converter controllers (26e, 28e) are configured to monitor frequency, voltage and/or current of power received from the power sources, and to inform the orchestration electronic controller (54) if power being received from the currently selected power source undergoes a predetermined variation,
wherein the orchestration electronic controller (54) is configured to use information from the first and second power converter controllers (26e, 28e) to command switching over, in real time, to a different power source (12-18), by selective closing and opening of the plurality of circuit breakers.

2. The system of claim 1, wherein the supplemental battery subsystem comprises at least one lithium ion battery cell.

3. The system of claim 2, wherein the at least one lithium ion battery cell is coupled via a dedicated power bus to the first and second power converters.

4. The system of claim 2, wherein the plurality of circuit breakers is configured for selectively coupling at least one of a plurality of available power sources, or the AC mains power source, to the first power converter or the second power converter.

5. The system of claim 1, wherein the first and second power converters are configured to recharge the supplemental battery subsystem when excess power beyond what is required to power the load is available from at least one of the power sources or the AC mains power source.

6. The system of claim 1, wherein the supplemental battery subsystem is configured to be held in a state of partial charge, and further configured to absorb periodic levels of excess power produced by the power sources which is not required for powering the load.

7. The system of claim 1, wherein the first and second power converter controllers are configured to command that a supplemental load be connected to the load when the power sources are generating excess power beyond that required to power the load.

8. The system of claim 1, wherein the first and second power converter controllers are configured to implement a soft loading feature by gradually drawing power from the power sources to support the load or a load increase, while additional power required to support the load or the load increase is supplied by an alternate power source.

9. The system of claim 1, wherein the orchestration electronic controller includes an orchestration software module having a submodule for carrying out a desired hierarchical power supply source usage scheme to control the use of the power sources, and at least one additional power source that is available to provide power to the load.

10. The system of claim 1, wherein the orchestration electronic controller includes an orchestration software module having a demand management submodule, the demand management submodule configured to at least one of:
enforce a preset limit on utility power being drawn from a power utility;
enforce a limit in response to utility requirements set by a utility power source;
enforce a utility guideline set by a utility power source; or
enforce a limit in response to a utility discount schedule set by a utility power source.

11. The system of claim 10, wherein an orchestration software module includes an orchestration layer configured to act as a control layer and to use at least one of external signals or internal predetermined settings to limit the amount of power drawn from the utility power source.

12. The system of claim 11, wherein the orchestration software module includes an energy cost optimization submodule configured to determine which of two or more available energy sources, at any given time of day, is the lowest cost energy source.

13. The system of claim 12, wherein the orchestration software module further includes a grid stabilization submodule configured to operate with the orchestration layer, and also with the energy cost optimization submodule and with external signals providing both power draw and cost information, to determine a needed amount of power grid stabilization energy required.

14. A power supply management method for use with power sources, to control an application of power to a load when an AC mains power source is not available to provide power to the load, the method comprising:
using a first power converter forming an uninterruptible power supply to assist in providing power from the power sources to the load;
using a second power converter forming an additional uninterruptible power supply to assist in providing power from the power sources to the load;
using a supplemental battery subsystem in communication with the first and second power converters to supply DC power to the first and second power converters;
controlling the first and second power converters to use the DC power provided from the supplemental battery subsystem to supplement the generation of power by the first and second power converters, to thus assist the power sources in powering the load; wherein an electronic controller (12d) is associated with a fuel cell subsystem (12), an electronic controller (16c) is associated with an external generator subsystem (16), and an electronic controller (18c) is associated with an integrated battery power subsystem (18);
receiving, by an orchestration electronic controller (54), inputs from the respective controllers (12d, 16c, 18c) of the power sources (12, 16, 18);
wherein the orchestration electronic controller (54) is in bi-directional communication with a first power converter controller (26e) of the first power converter (26) and a second power converter controller (28e) of the second power converter (28);
monitoring overall operation of the first and second power converters (26,28) using information received from the first and second power converter controllers (26e, 28e);
using, by the orchestration electronic controller (54), information received from the controllers (12d, 16c, 18c) of the power sources, in real time, to monitor which power supply source (12-18) of the power sources is presently being used at any given time;
monitoring, by the first and second power converter controllers (26e, 28e), frequency, voltage and/or current of power received from the power sources, and informing the orchestration electronic controller (54) if power being received from the currently selected power source undergoes a predetermined variation, and
using, by the orchestration electronic controller (54), information from the first and second power converter controllers (26e, 28e) to command switching over, in real time, to a different power source (12-18), by selective closing and opening of a plurality of circuit breakers.

## Patentansprüche

1. Leistungsversorgungsmanagementsystem (10), angepasst zur Verwendung mit Leistungsquellen (12, 14, 16, 18) zum Steuern der Versorgung einer Last mit Leistung, wenn keine Wechselstromnetzleistungsquelle verfügbar ist, um der Last Leistung bereitzustellen, wobei das System Folgendes umfasst:
einen ersten Leistungswandler (26), der eine unterbrechungsfreie Leistungsversorgung bildet, wobei der erste Leistungswandler eine erste Leistungswandlersteuerung (26e) beinhaltet, die dazu ausgelegt ist, den Betrieb des ersten Leistungswandlers (26) zu steuern;
einen zweiten Leistungswandler (28), der eine zusätzliche unterbrechungsfreie Leistungsversorgung bildet, wobei der zweite Leistungswandler (28) eine zweite Leistungswandlersteuerung (28e) beinhaltet, die dazu ausgelegt ist, den Betrieb des zweiten Leistungswandlers (28) zu steuern;
ein zusätzliches Batterieteilsystem (30) in Kommunikation mit dem ersten und dem zweiten Leistungswandler (26,28) zum Zuführen von Gleichstrom zu dem ersten und dem zweiten Leistungswandler (26,28);
mehrere Trennschalter, die dazu ausgelegt sind, die Versorgung der Last mit Leistung zu steuern;
wobei die erste und die zweite Leistungswandlersteuerung (26e, 28e) ferner dazu ausgelegt sind, das Anlegen von Leistung von den Leistungsquellen an die Last zu überwachen und die durch das zusätzliche Batterieteilsystem gelieferte Gleichstromleistung zu verwenden, um die Erzeugung von Leistung durch den jeweiligen Leistungswandler zu ergänzen, um somit beim Versorgen der Last zusammen mit der Leistung, die durch die Leistungsquellen bereitgestellt wird, zu unterstützen; und
eine elektronische Orchestrierungssteuerung (54), wobei die elektronische Orchestrierungssteuerung (54) dazu ausgelegt ist, Eingaben von jeweiligen Steuerungen (12d, 16c, 18c) der Leistungsquellen (12, 16, 18), nämlich von einer elektronischen Steuerung (12d), die mit einem Brennstoffzellenteilsystem (12) assoziiert ist, von einer elektronischen Steuerung (16c), die mit einem externen Generatorteilsystem (16) assoziiert ist, und von einer elektronischen Steuerung (18c), die mit einem integrierten Batterieleistungsteilsystem (18) assoziiert ist, zu empfangen;
die elektronische Orchestrierungssteuerung (54) in bidirektionaler Kommunikation mit der ersten Leistungswandlersteuerung (26e) und der zweiten Leistungswandlersteuerung (28e) steht;
die elektronische Orchestrierungssteuerung (54) dazu ausgelegt ist, den Gesamtbetrieb des ersten und des zweiten Leistungswandlers (26,28) unter Verwendung von Informationen zu überwachen, die von der ersten und der zweiten Leistungswandlersteuerung (26e,28e) empfangen werden;
die elektronische Orchestrierungssteuerung (54) dazu ausgelegt ist, Informationen, die von den Steuerungen (12d, 16c, 18c) der Leistungsquellen empfangen werden,
in Echtzeit zu verwenden, um zu überwachen, welche Leistungsversorgungsquelle (12-18) der Leistungsquellen gegenwärtig zu einer beliebigen gegebenen Zeit verwendet wird,
wobei die erste und die zweite Leistungswandlersteuerung (26e, 28e) dazu ausgelegt sind, Frequenz, Spannung und/oder Strom der von den Leistungsquellen empfangenen Leistung zu überwachen und die elektronische Orchestrierungssteuerung (54) zu informieren, ob Leistung, die von der aktuell ausgewählten Leistungsquelle empfangen wird, einer vorbestimmten Variation unterliegt,
wobei die elektronische Orchestrierungssteuerung (54) dazu ausgelegt ist, Informationen von der ersten und der zweiten Leistungswandlersteuerung (26e, 28e) zu verwenden, um ein Umschalten in Echtzeit zu einer anderen Leistungsquelle (12-18) durch gezieltes Schließen und Öffnen der mehreren Trennschalter anzuweisen.

2. System nach Anspruch 1, wobei das zusätzliche Batterieteilsystem mindestens eine Lithium-Ionen-Batteriezelle umfasst.

3. System nach Anspruch 2, wobei die mindestens eine Lithium-Ionen-Batteriezelle über einen dedizierten Leistungsbus mit dem ersten und dem zweiten Leistungswandler gekoppelt ist.

4. System nach Anspruch 2, wobei die mehreren Trennschalter zum gezielten Koppeln von mindestens einer von mehreren verfügbaren Leistungsquellen oder der Wechselstromnetzleistungsquelle mit dem ersten Leistungswandler oder dem zweiten Leistungswandler ausgelegt sind.

5. System nach Anspruch 1, wobei der erste und der zweite Leistungswandler dazu ausgelegt sind, das zusätzliche Batterieteilsystem aufzuladen, wenn überschüssige Leistung, die über das hinausgeht, was erforderlich ist, um die Last mit Leistung zu versorgen, von mindestens einer der Leistungsquellen oder der Wechselstromnetzleistungsquelle verfügbar ist.

6. System nach Anspruch 1, wobei das zusätzliche Batterieteilsystem dazu ausgelegt ist, in einem Teilladezustand gehalten zu werden, und ferner dazu ausgelegt ist, periodische Pegel von Überschussleistung zu absorbieren, die durch die Leistungsquellen erzeugt werden, die nicht zum Versorgen der Last erforderlich sind.

7. System nach Anspruch 1, wobei die erste und die zweite Leistungswandlersteuerung dazu ausgelegt sind, anzuweisen, dass eine zusätzliche Last mit der Last verbunden wird, wenn die Leistungsquellen überschüssige Leistung über die zum Versorgen der Last erforderliche hinaus erzeugen.

8. System nach Anspruch 1, wobei die erste und die zweite Leistungswandlersteuerung dazu ausgelegt sind, ein Soft-Loading-Merkmal zu implementieren, indem sie allmählich Leistung von den Leistungsquellen ziehen, um die Last oder eine Lasterhöhung zu unterstützen, während zusätzliche Leistung, die erforderlich ist, um die Last oder die Lasterhöhung zu unterstützen, von einer alternativen Leistungsquelle geliefert wird.

9. System nach Anspruch 1, wobei die elektronische Orchestrierungssteuerung ein Orchestrierungssoftwaremodul mit einem Teilmodul zum Durchführen eines gewünschten hierarchischen Leistungsversorgungsquellennutzungsschemas zum Steuern der Verwendung der Leistungsquellen und mindestens einer zusätzlichen Leistungsquelle, die verfügbar ist, um der Last Leistung bereitzustellen, beinhaltet.

10. System nach Anspruch 1, wobei die elektronische Orchestrierungssteuerung ein Orchestrierungssoftwaremodul mit einem Bedarfsverwaltungsteilmodul beinhaltet, wobei das Bedarfsverwaltungsteilmodul zu mindestens einem aus Folgendem ausgelegt ist:
Durchsetzen einer voreingestellten Grenze für die von einem Leistungsversorgungsgerät entnommene Versorgungsleistung;
Durchsetzen einer Begrenzung als Reaktion auf Versorgungsanforderungen, die von einer Versorgungsleistungsquelle festgelegt werden;
Durchsetzen einer Versorgungsrichtlinie, die von einer Versorgungsleistungsquelle festgelegt wird; oder
Durchsetzen einer Begrenzung als Reaktion auf einen von einer Versorgungsleistungsquelle festgelegten Dienstleistungsplan.

11. System nach Anspruch 10, wobei ein Orchestrierungssoftwaremodul eine Orchestrierungsschicht beinhaltet, die dazu ausgelegt ist, als eine Steuerschicht zu fungieren und mindestens eines aus externen Signalen oder internen vorbestimmten Einstellungen zu verwenden, um die Menge an Leistung, die von der Versorgungsleistungsquelle entnommen wird, zu begrenzen.

12. System nach Anspruch 11, wobei das Orchestrierungssoftwaremodul ein Energiekostenoptimierungs-Teilmodul beinhaltet, das dazu ausgelegt ist, zu bestimmen, welche von zwei oder mehr verfügbaren Energiequellen zu einer beliebigen gegebenen Tageszeit die Energiequelle mit den niedrigsten Kosten ist.

13. System nach Anspruch 12, wobei das Orchestrierungssoftwaremodul ferner ein Netzstabilisierungs-Teilmodul beinhaltet, das dazu ausgelegt ist, mit der Orchestrierungsschicht und auch mit dem Energiekostenoptimierungs-Teilmodul und mit externen Signalen, die sowohl Leistungsaufnahme- als auch Kosteninformationen bereitstellen, zu arbeiten, um eine erforderliche Menge an erforderlicher Leistungsnetzstabilisierungsenergie zu bestimmen.

14. Leistungsversorgungsmanagementverfahren zur Verwendung mit Leistungsquellen, um eine Anwendung von Leistung auf eine Last zu steuern, wenn keine Wechselstromnetzleistungsquelle verfügbar ist, um Leistung für die Last bereitzustellen, wobei das Verfahren Folgendes umfasst:
Verwenden eines ersten Leistungswandlers, der eine unterbrechungsfreie Leistungsversorgung bildet, um das Bereitstellen von Leistung von den Leistungsquellen für die Last zu unterstützen;
Verwenden eines zweiten Leistungswandlers, der eine zusätzliche unterbrechungsfreie Leistungsversorgung bildet, um das Bereitstellen von Leistung von den Leistungsquellen für die Last zu unterstützen;
Verwenden eines zusätzlichen Batterieteilsystems in Kommunikation mit dem ersten und dem zweiten Leistungswandler, um Gleichstromleistung an den ersten und den zweiten Leistungswandler zu liefern;
Steuern des ersten und des zweiten Leistungswandlers, um die von dem zusätzlichen Batterieteilsystem bereitgestellte Gleichstromleistung zu verwenden, um die Erzeugung von Leistung durch den ersten und den zweiten Leistungswandler zu ergänzen, um somit die Leistungsquellen beim Versorgen der Last zu unterstützen;
wobei eine elektronische Steuerung (12d) mit einem Brennstoffzellenteilsystem (12) assoziiert ist, eine elektronische Steuerung (16c) mit einem externen Leistungsgeneratorteilsystem (16) assoziiert ist und eine elektronische Steuerung (18c) mit einem integrierten Batterieteilsystem (18) assoziiert ist;
Empfangen, durch eine elektronische Orchestrierungssteuerung (54), von Eingaben von den jeweiligen Steuerungen (12d, 16c, 18c) der Leistungsquellen (12, 16, 18);
wobei die elektronische Orchestrierungssteuerung (54) in bidirektionaler Kommunikation mit einer ersten Leistungswandlersteuerung (26e) des ersten Leistungswandlers (26) und einer zweiten Leistungswandlersteuerung (28e) des zweiten Leistungswandlers (28) steht;
Überwachen des Gesamtbetriebs des ersten und des zweiten Leistungswandlers (26,28) unter Verwendung von Informationen, die von der ersten und der zweiten Leistungswandlersteuerung (26e, 28e) empfangen werden;
Verwenden, durch die elektronische Orchestrierungssteuerung (54), von Informationen, die von den Steuerungen (12d, 16c, 18c) der Leistungsquellen empfangen werden, in Echtzeit, um zu überwachen, welche Leistungsversorgungsquelle (12-18) der Leistungsquellen gegenwärtig zu einem beliebigen gegebenen Zeitpunkt verwendet wird;
Überwachen, durch die erste und die zweite Leistungswandlersteuerung (26e, 28e), von Frequenz, Spannung und/oder Strom von Leistung, die von den Leistungsquellen empfangen wird, und Informieren der elektronischen Orchestrierungssteuerung (54), falls Leistung, die von der aktuell ausgewählten Leistungsquelle empfangen wird, einer vorbestimmten Variation unterliegt, und
Verwenden, durch die elektronische Orchestrierungssteuerung (54), von Informationen von der ersten und der zweiten Leistungswandlersteuerung (26e, 28e), um ein Umschalten in Echtzeit zu einer anderen Leistungsquelle (12-18) durch gezieltes Schließen und Öffnen mehrerer Trennschalter anzuweisen.

## Revendications

1. Système de gestion d'alimentation électrique (10) conçu pour être utilisé avec des sources d'alimentation (12, 14, 16, 18), pour commander l'alimentation d'une charge lorsqu'une source d'alimentation secteur en courant alternatif n'est pas disponible pour fournir de l'énergie à la charge, le système comprenant :
un premier convertisseur de puissance (26) formant une alimentation sans coupure, le premier convertisseur de puissance comportant un premier contrôleur de convertisseur de puissance (26e) configuré pour commander le fonctionnement du premier convertisseur de puissance (26) ;
un second convertisseur de puissance (28) formant une alimentation sans coupure supplémentaire, le second convertisseur de puissance (28) comportant un second contrôleur de convertisseur de puissance (28e) configuré pour commander le fonctionnement du second convertisseur de puissance (28) ;
un sous-système de batterie complémentaire (30) en communication avec les premier et second convertisseurs de puissance (26, 28) pour fournir une alimentation en courant continu aux premier et second convertisseurs de puissance (26, 28) ;
une pluralité de disjoncteurs configurés pour commander l'alimentation électrique de la charge ;
les premier et second contrôleurs de convertisseurs de puissance (26e, 28e) sont en outre configurés pour surveiller l'application à la charge d'une énergie provenant des sources d'alimentation, et pour utiliser l'alimentation en courant continu fournie par le sous-système de batterie complémentaire pour compléter la production d'énergie par le convertisseur de puissance respectif, afin d'aider à alimenter la charge en complément de l'énergie fournie par les sources d'alimentation ; et
un contrôleur électronique d'orchestration (54), dans lequel
le contrôleur électronique d'orchestration (54) est configuré pour recevoir des entrées en provenance de contrôleurs respectifs (12d, 16c, 18c) des sources d'alimentation (12, 16, 18), à savoir d'un contrôleur électronique (12d) associé à un sous-système de pile à combustible (12), d'un contrôleur électronique (16c) associé à un sous-système générateur externe (16), et
d'un contrôleur électronique (18c) associé à un sous-système intégré d'alimentation par batterie (18) ;
le contrôleur électronique d'orchestration (54) est en communication bidirectionnelle avec le premier contrôleur de convertisseur de puissance (26e) et le second contrôleur de convertisseur de puissance (28e) ;
le contrôleur électronique d'orchestration (54) est configuré pour surveiller le fonctionnement global des premier et second convertisseurs de puissance (26, 28) en utilisant des informations reçues des premier et second contrôleurs de convertisseurs de puissance (26e, 28e) ;
le contrôleur électronique d'orchestration (54) est configuré pour utiliser des informations reçues en provenance des contrôleurs (12d, 16c, 18c) des sources d'alimentation, en temps réel, pour surveiller quelle source d'alimentation électrique (12-18) des sources d'alimentation est actuellement utilisée à un moment donné,
les premier et second contrôleurs de convertisseurs de puissance (26e, 28e) étant configurés pour surveiller une fréquence, une tension et/ou un courant d'une alimentation reçue des sources d'alimentation, et pour informer le contrôleur électronique d'orchestration (54) si l'alimentation reçue de la source d'alimentation actuellement sélectionnée subit une variation prédéterminée,
le contrôleur électronique d'orchestration (54) étant configuré pour utiliser des informations issues des premier et second contrôleurs de convertisseurs de puissance (26e, 28e) pour commander le basculement en temps réel vers une source d'alimentation (12-18) différente, par fermeture et ouverture sélective de la pluralité de disjoncteurs.

2. Système selon la revendication 1, dans lequel le sous-système de batterie complémentaire comprend au moins une cellule de batterie lithium-ion.

3. Système selon la revendication 2, dans lequel l'au moins une cellule de batterie lithium-ion est couplée via un bus d'alimentation dédié aux premier et second convertisseurs de puissance.

4. Système selon la revendication 2, dans lequel la pluralité de disjoncteurs est configurée pour coupler sélectivement au moins l'une d'une pluralité de sources d'alimentation disponibles, ou la source d'alimentation secteur en courant alternatif, au premier convertisseur de puissance ou au second convertisseur de puissance.

5. Système selon la revendication 1, dans lequel les premier et second convertisseurs de puissance sont configurés pour recharger le sous-système de batterie complémentaire lorsqu'une puissance excédentaire au-delà de ce qui est nécessaire pour alimenter la charge est disponible à partir d'au moins l'une des sources d'alimentation ou de la source d'alimentation secteur en courant alternatif.

6. Système selon la revendication 1, dans lequel le sous-système de batterie complémentaire est configuré pour être maintenu dans un état de charge partielle, et configuré en outre pour absorber des niveaux périodiques d'énergie excédentaire produite par les sources d'alimentation qui n'est pas nécessaire pour alimenter la charge.

7. Système selon la revendication 1, dans lequel les premier et second contrôleurs de convertisseurs de puissance sont configurés pour commander qu'une charge complémentaire soit connectée à la charge lorsque les sources d'alimentation génèrent une puissance excédentaire au-delà de celle requise pour alimenter la charge.

8. Système selon la revendication 1, dans lequel les premier et second contrôleurs de convertisseurs de puissance sont configurés pour mettre en œuvre une caractéristique de charge souple en tirant progressivement de l'énergie des sources d'alimentation pour supporter la charge ou une augmentation de charge, tandis que l'énergie supplémentaire requise pour supporter la charge ou l'augmentation de charge est fournie par une source d'alimentation alternative.

9. Système selon la revendication 1, dans lequel le contrôleur électronique d'orchestration comprend un module logiciel d'orchestration ayant un sous-module pour exécuter un schéma d'utilisation de source d'alimentation électrique hiérarchique souhaité pour commander l'utilisation des sources d'alimentation, et au moins une source d'alimentation supplémentaire qui est disponible pour fournir de l'énergie à la charge.

10. Système selon la revendication 1, dans lequel le contrôleur électronique d'orchestration comprend un module logiciel d'orchestration ayant un sous-module de gestion de demande, le sous-module de gestion de demande étant configuré pour au moins l'une des opérations suivantes :
appliquer une limite prédéfinie sur la consommation d'électricité fournie par un service public ;
appliquer une limite en réponse aux exigences de service public fixées par une source d'alimentation du service public ;
appliquer une directive de service public définie par une source d'alimentation du service public ; ou
appliquer une limite en réponse à un calendrier de remise de service public défini par une source d'alimentation du service public.

11. Système selon la revendication 10, dans lequel un module logiciel d'orchestration comprend une couche d'orchestration configurée pour agir comme une couche de commande et pour utiliser au moins l'un des signaux externes ou des réglages prédéterminés internes pour limiter la quantité d'énergie tirée de la source d'alimentation du service public.

12. Système selon la revendication 11, dans lequel le module logiciel d'orchestration comprend un sous-module d'optimisation du coût énergétique configuré pour déterminer laquelle de deux sources d'alimentation disponibles ou plus, à un moment donné quelconque de la journée, est la source d'alimentation de coût le plus bas.

13. Système selon la revendication 12, dans lequel le module logiciel d'orchestration comprend en outre un sous-module de stabilisation du réseau électrique configuré pour fonctionner avec la couche d'orchestration, et également avec le sous-module d'optimisation du coût énergétique et avec des signaux externes fournissant à la fois des informations de consommation d'énergie et de coût, pour déterminer une quantité nécessaire d'énergie de stabilisation du réseau électrique requise.

14. Procédé de gestion d'alimentation électrique à utiliser avec des sources d'alimentation, pour commander une application d'énergie à une charge lorsqu'une source d'alimentation secteur à courant alternatif n'est pas disponible pour fournir de l'énergie à la charge, le procédé comprenant :
l'utilisation d'un premier convertisseur de puissance formant une alimentation sans coupure pour aider à fournir de l'énergie à la charge à partir des sources d'alimentation ;
l'utilisation d'un second convertisseur de puissance formant une alimentation sans coupure supplémentaire pour aider à fournir de l'énergie à la charge à partir des sources d'alimentation ;
l'utilisation d'un sous-système de batterie complémentaire en communication avec les premier et second convertisseurs de puissance pour fournir de l'énergie électrique en courant continu aux premier et second convertisseurs de puissance ;
la commande des premier et second convertisseurs de puissance pour utiliser l'énergie électrique en courant continu fournie par le sous-système de batterie complémentaire afin de compléter la production d'énergie par les premier et second convertisseurs de puissance, afin d'aider les sources d'alimentation à alimenter la charge ; un contrôleur électronique (12d) étant associé à un sous-système de pile à combustible (12), un contrôleur électronique (16c) étant associé à un sous-système de générateur externe (16), et un contrôleur électronique (18c) étant associé à un sous-système intégré d'alimentation par batterie (18) ;
la réception, par un contrôleur électronique d'orchestration (54), d'entrées provenant des contrôleurs respectifs (12d, 16c, 18c) des sources d'alimentation (12, 16, 18) ;
le contrôleur électronique d'orchestration (54) étant en communication
bidirectionnelle avec un premier contrôleur de convertisseur de puissance (26e) du premier convertisseur de puissance (26) et un second contrôleur de convertisseur de puissance (28e) du second convertisseur de puissance (28) ;
la surveillance du fonctionnement global des premier et second convertisseurs de puissance (26,28) en utilisant des informations reçues des premier et second contrôleurs de convertisseurs de puissance (26e, 28e) ;
l'utilisation, par le contrôleur électronique d'orchestration (54), d'informations reçues en provenance des contrôleur (12d, 16c, 18c) des sources d'alimentation, en temps réel, pour surveiller quelle source d'alimentation électrique (12-18) des sources d'alimentation est actuellement utilisée à un moment donné ;
la surveillance, par les premier et second contrôleurs de convertisseurs de puissance (26e, 28e), d'une fréquence, une tension et/ou un courant d'une alimentation reçue des sources d'alimentation, et
l'information du contrôleur électronique d'orchestration (54) du fait que l'alimentation reçue de la source d'alimentation actuellement sélectionnée subit ou non une variation prédéterminée,
l'utilisation, par le contrôleur électronique d'orchestration (54), d'informations provenant des premier et second contrôleurs de convertisseurs de puissance (26e, 28e) pour commander un basculement, en temps réel, vers une source d'alimentation (12-18) différente, par fermeture et ouverture sélective d'une pluralité de disjoncteurs.
